# EUROPÄISCHE PATENTSCHRIFT

(11) **EP 2 577 253 B1**
(45) Veröffentlichungstag und Bekanntmachung des Hinweises auf die Patenterteilung: **21.08.2019**
(21) Anmeldenummer: 11716205.7
(22) Anmeldetag: 15.04.2011
(51) Int. Cl.: F02D 41/14, G01N 15/02, G01N 15/06

(54) **VERFAHREN ZUM ERFASSEN VON PARTIKELN IN EINEM ABGASSTROM**
METHOD FOR DETECTING PARTICLES IN AN EXHAUST GAS STREAM
PROCÉDÉ POUR LA DÉTECTION DE PARTICULES DANS UN FLUX DE GAZ D'ÉCHAPPEMENT

(30) Priorität: 01.06.2010 DE 102010029575
(43) Veröffentlichungstag der Anmeldung: 10.04.2013
(73) Patentinhaber: Robert Bosch GmbH, 70442 Stuttgart (DE)
(72) Erfinder: ECKARDT, Martin, 70197 Stuttgart (DE)
(86) Internationale Anmeldenummer: PCT/EP2011/055976
(87) Internationale Veröffentlichungsnummer: WO 2011/151104

(56) Entgegenhaltungen:
- EP-A1- 2 525 215
- EP-A2- 2 169 381
- WO-A1-2005/093233
- WO-A1-2007/023035
- DE-A1- 10 128 869
- DE-A1- 10 242 301
- DE-A1-102009 024 782

## Beschreibung

### Stand der Technik

Die vorliegende Erfindung bezieht sich auf ein Verfahren zum Erfassen von Partikeln in einem entlang einer Führung geleiteten Abgasstrom eines Fahrzeugs.

Um den Partikelausstoß eines Dieselmotors zu reduzieren, werden seit einiger Zeit Rußpartikelfilter eingesetzt. Zur Überwachung der korrekten Funktionsweise dieser Filter, oder um die nötigen Regenerationsphasen selektiv durchführen zu können, können Sensoren verwendet werden, die die Partikel im Abgas detektieren.

Die WO 2004/097392 A1 offenbart einen Sensor zur Detektion von Teilchen, insbesondere von Rußpartikeln, in einem Gasstrom. Zwei Messelektroden, die zum Schutz von einer Schutzschicht überzogen sind, messen eine Rußkonzentration auf der Sensorfläche mittels einer Bestimmung eines elektrischen Widerstands zwischen den Messelektroden.

Die DE 10 2009 024 782 A1 betrifft ein Verfahren und eine Messanordnung zum Bestimmen einer Wirkungsfähigkeit eines SCR-Katalysators. Es wird ein Vorliegen von flüssigem Wasser in einem Abgasgemisch erfasst, was einen Rückschluss auf eine Sorptionsfähigkeit des SCR-Katalysators ermöglicht.

In der WO 2005/093233 A1 wird eine Vorrichtung zur Feststellung des Zustands eines Rußpartikelfilters einer Brennkraftmaschine vorgeschlagen. Eine elektrische Messanordnung ist als ein Rußsensor zur Erfassung einer elektrischen oder magnetischen Kenngröße als Maß für eine Rußablagerung ausgebildet.

### Offenbarung der Erfindung

Vor diesem Hintergrund wird mit der vorliegenden Erfindung ein Verfahren zum Erfassen von Partikeln in einem entlang einer Führung geleiteten Abgasstrom eines Fahrzeugs gemäß dem unabhängigen Anspruch 1 vorgestellt.

Die Erfindung basiert auf der Erkenntnis, dass eine durch die Partikel veränderte Dielektrizitätszahl des Abgases gemessen werden kann. So beträgt beispielsweise die Dielektrizitätszahl von Luft, ε_{r,Luft}, 1,0 und die Dielektrizitätszahl von Ruß, ε_{r,Ruß}, 19. Die Dielektrizitätszahl εᵣ kann z.B. in eine Kapazität zweier Elektroden eingehen, zwischen denen sich das zu messende Gas befindet. Für einen Plattenkondensator mit einer Fläche A und einem Abstand d der Platten gilt für die Kapazität C: C = εᵣ ε₀ A / d.

Ein weiterer Kern der Erfindung besteht darin, eine frequenzabhängige Kapazität zu benutzen, um weitere Eigenschaften der Partikel zu bestimmen. So können z.B. aus einer Impedanzmessung Partikelgrößen bzw. eine Partikelgrößenverteilung abgeleitet werden. Damit kann z.B. eine Erzeugung von medizinisch besonders relevanten Kleinstpartikeln detektiert werden.

Bei dem erfindungsgemäßen Messprinzip zur Rußpartikeldetektion müssen die messenden Elektroden nicht direkt dem Gas ausgesetzt werden. Somit kann die Haltbarkeit und Genauigkeit der Elektroden deutlich erhöht werden. Weiterhin können vorteilhafterweise aus der Messung der Frequenzabhängigkeit der Kapazität weitere Partikelensembleeigenschaften abgeleitet werden. Beispielsweise kann eine Größenverteilung abgeleitet werden, die mit der Messung einer Größe nicht zugänglich ist.

Gemäß dem erfindungsgemäßen Ansatz kann auf einen Einsatz von Entladungsprinzipien, bei denen die (ionisierten) Rußpartikel zu einem schnelleren Durchschlagen eines hohen elektrischen Feldes führen, oder auf resistive Sensoren, die eine elektrische Leitfähigkeit von am Sensor angelagerten Rußpartikeln detektieren, verzichtet werden. Die Entladungsprinzipien benötigen hohe elektrische Spannungen, die im Fahrzeug aufwändig generiert werden müssen und sicherheitstechnisch schwierig zu handhaben sind. Bei den resistiven Prinzipien müssen Elektroden in direkten Kontakt mit dem Abgas treten, was eine Lebensdauer der Kontakte stark beeinträchtigen kann, z.B. durch Korrosion, Haftungsverlust, etc. Diese Nachteile können erfindungsgemäß umgangen werden.

Die vorliegende Erfindung schafft ein Verfahren zum Erfassen von Partikeln, insbesondere in einem entlang einer Führung geleiteten Abgasstrom eines Fahrzeugs, mittels eines Partikelsensors, der mindestens zwei Elektroden aufweist, die in der Führung angeordnet sind, wobei das Verfahren die folgenden Schritte aufweist: Anlegen einer ersten Spannung und einer zweiten Spannung an die mindestens zwei Elektroden, um ein erstes elektrisches Feld und ein zweites elektrisches Feld zwischen den mindestens zwei Elektroden zu erzeugen; Ermitteln eines dem ersten elektrischen Feld entsprechenden ersten Kapazitätswertes und eines dem zweiten elektrischen Feld entsprechenden zweiten Kapazitätswertes eines durch die mindestens zwei Elektroden gebildeten Kondensators; und Ermitteln einer Information über die in dem Abgasstrom enthaltenen Partikel aus dem ersten Kapazitätswert und dem zweiten Kapazitätswert.

Bei der Führung kann es sich beispielsweise um ein Rohr mit Aussparungen handeln, in denen die Elektroden des Partikelsensors angeordnet sein können. Der Abgasstrom kann z.B. so entlang einer Hauptseite der Führung geleitet werden, dass er nacheinander an den in der Führung angeordneten Elektroden vorbeiströmt. Bei den Partikeln kann es sich beispielsweise um Rußteilchen handeln, die zusammen mit anderen Reststoffen bei der Kraftstoffverbrennung in einem Kraftfahrzeug entstehen und durch die Abgasleitung des Fahrzeugs ausgestoßen werden. Derartige Rußpartikel können z.B. bei der Verbrennung von Dieselkraftstoff entstehen. Die Partikel können in veränderlicher Masse in dem Abgasstrom enthalten sein und unterschiedliche Größen aufweisen. Die Masse, Größe und auch Zusammensetzung der Partikel kann je nach Laufzeit und Lastsituation des Verbrennungsmotors variieren. So wird sich eine Charakteristik der Partikel kurz nach einem Anlassen des Verbrennungsmotors von einer Charakteristik der Partikel nach längerer Fahrt unterscheiden. Die Charakteristik der Partikel kann mittels des erfindungsgemäßen Verfahrens unter Einsatz des Partikelsensors in regelmäßigen Zeitabständen oder ansprechend auf bestimmte Ereignisse bestimmt werden. In der Regel wird eine Vielzahl von Erfassungen während einer Fahrt durchgeführt. Bei dem Partikelsensor kann es sich um einen kapazitiven Sensor handeln, bei dem eine der mindestens zwei Elektroden als Anode und eine weitere der mindestens zwei Elektroden als Kathode dient. Der Abgasstrom kann so geleitet werden, dass zumindest ein Anteil des Abgasstroms das zwischen den Elektroden erzeugte elektrische Feld durchströmt. Auf diese Weise stellt der Abgasstrom zumindest einen Anteil eines Dielektrikums zwischen den Elektroden dar. Eine Dielektrizitätszahl des Dielektrikums ist somit abhängig von dem Abgasstrom und insbesondere von einer Menge und/oder Größe der Partikel des Abgasstroms. Bei einer Änderung der Zusammensetzung des Abgasstroms kann sich die Dielektrizitätszahl ändern. Eine zwischen den Elektroden messbare Kapazität ist abhängig von der Dielektrizitätszahl und somit von der Zusammensetzung des Abgasstroms. Somit kann unter Kenntnis eines an die Elektroden angelegten Spannungswertes und eines zwischen den Elektroden gemessenen Kapazitätswertes auf die Zusammensetzung des Abgasstroms geschlossen werden. Die erste Spannung und die zweite Spannung werden zeitlich aufeinanderfolgend, beispielsweise alternierend, an die Elektroden angelegt. Die Spannungen unterscheiden sich in ihrer Größe und Frequenz. Die Spannungswerte und die Frequenzwerte werden je nach Art des zu analysierenden Abgasstroms sowie der geometrischen Ausformung und Anordnung der Elektroden und der Führung eingestellt. Wird das Verfahren in einem Fahrzeug eingesetzt, so weisen die Spannungen und die Frequenzen vorteilhafterweise Werte auf, die sich im Fahrzeug ohne großen Aufwand bereitstellen lassen. Demnach können die erste und zweite Spannung Spannungswerte aus einem Spannungsbereich von 1V bis 1kV und Frequenzwerte zwischen Gleichspannung DC und 100 MHz aufweisen. Diese Werte sind jedoch nur beispielhaft gewählt und können sowohl nach unten als auch nach oben überschritten werden. Ein Spannungsunterschied zwischen der ersten Spannung und der zweiten Spannung kann in einem Bereich von einem oder mehreren Volt, beispielsweise 2V, 5V, 10V, 25V, 50V oder 100V, in einem Bereich von einigen hundert Volt, beispielsweise 200V, 300V, 500V oder auch im Kilovoltbereich liegen. Ein Frequenzunterschied zwischen der ersten Spannung und der zweiten Spannung kann in einem Bereich von einigen Herz, beispielsweise 10Hz, 25Hz, 50Hz oder 100Hz, in einem Bereich von einigen hundert Herz, beispielsweise 200Hz, 300Hz, 500Hz, in einem Bereich von einigen Kiloherz, beispielsweise 200KHz, 300KHz, 500KHz oder in einem Bereich von einem oder mehreren Megaherz liegen. Ansprechend auf ein Anlegen einer der Spannungen wird jeweils ein zugeordneter Kapazitätswert ermittelt. Die Ermittlung des Kapazitätswertes kann mittels bekannter Messverfahren erfolgen. Indem zumindest zwei unterschiedliche Spannungen eingesetzt werden, wird der Abgasstrom zumindest zwei unterschiedlichen elektrischen Feldern ausgesetzt, die jeweils unterschiedliche Dielektrizitätszahlen und somit unterschiedliche Kapazitätswerte hervorrufen. Auf diese Weise kann die Charakteristik der Partikel wesentlich genauer bestimmt werden, als wenn lediglich eine Messung mit einer Spannung durchgeführt werden würde. Die Charakteristik der Partikel kann durch einen Vergleich der Kapazitätswerte mit Referenzwerten oder durch einen Vergleich der Kapazitätswerte untereinander bestimmt werden. Es können auch eine oder mehrere weitere Spannungen angelegt werden, um einen oder mehrere weitere Kapazitätswerte zu bestimmen.

Gemäß der Erfindung weist das Verfahren einen Schritt des Vergleichens des ersten Kapazitätswertes mit einem ersten Referenzwert und des zweiten Kapazitätswertes mit einem zweiten Referenzwert auf. Basierend auf den Vergleichen wird eine Information über die in dem Abgasstrom enthaltenen Partikel bestimmt. Der Schritt des Vergleichens kann z.B. in einer Auswerteeinrichtung erfolgen, in der der erste und zweite Referenzwert gespeichert sind. Der erste und zweite Referenzwert können beispielsweise vorab im Labor für bestimmte Fahrzeug- und/oder Motortypen ermittelt worden sein. Die Referenzwerte stellen Kapazitätswerte dar, die jeweils einer bestimmten Charakteristik der in dem Abgasstrom enthaltenen Partikel entsprechen. Abhängig davon, ob ein Kapazitätswert größer, kleiner oder gleich einem entsprechenden Referenzwert ist, wird ein entsprechender Rückschluss auf die Charakteristik der Partikel geschlossen. Durch einen Vergleich der Kapazitätswerte mit den Referenzwerten wird schnell und einfach auf die Charakterisik der Partikel geschlossen. Zur Durchführung des Vergleichs kann ein geeigneter Algorithmus eingesetzt werden.

Gemäß der Erfindung wird, wenn in dem Schritt des Anlegens als erste Spannung eine Gleichspannung angelegt wird, in dem Schritt des Vergleichens des ersten Kapazitätswertes mit einem ersten Referenzwert eine Information über eine Menge der in dem Abgasstrom enthaltenen Partikel bestimmt. Ferner wird, wenn in dem Schritt des Anlegens als zweite Spannung eine Wechselspannung angelegt wird, in dem Schritt des Vergleichens des zweiten Kapazitätswertes mit dem zweiten Referenzwert eine Information über eine Art oder Größe der in dem Abgasstrom enthaltenen Partikel bestimmt. Entsprechend wird in dem Schritt des Anlegens als erste Spannung eine Gleichspannung und als zweite Spannung eine Wechselspannung angelegt. Alternativ kann auch zuerst eine Wechselspannung und anschließend eine Gleichspannung angelegt werden. Vorteilhafterweise können so auf einfache und schnelle Weise mithilfe ein und derselben Messanordnung unterschiedliche Eigenschaften der Partikel in dem Abgasstrom untersucht werden.

Die unterschiedlichen verwendeten Frequenzen wirken sich insofern aus, als polarisierte Partikel unterschiedlicher Größe und/oder Masse sich unterschiedlich schnell in dem ersten oder zweiten elektrischen Feld ausrichten bzw. trennen können. So können sich z.B. bei hohen Frequenzen nur kleine und/oder leichte Partikel in dem elektrischen Feld ausrichten bzw. trennen und somit als Dielektrikum sichtbar sein, während die großen, unbeweglichen Partikel erst bei geringeren Frequenzen zur Veränderung des effektiven Epsilons, also der Dielektrizitätszahl, beitragen können. Die frequenzabhängige Messung liefert somit eine Möglichkeit zur Bestimmung einer Größenverteilung der gemessenen Partikel.

Bei dem Partikelsensor zum Erfassen von Partikeln in einem entlang einer Führung geleiteten Abgasstrom eines Fahrzeugs kann es sich um einen Partikelsensor handeln, der folgende Merkmale aufweist: mindestens zwei Elektroden, die in der Führung angeordnet sind; eine Einrichtung zum Anlegen einer ersten Spannung und einer zweiten Spannung an die mindestens zwei Elektroden, um ein erstes elektrisches Feld und ein zweites elektrisches Feld zwischen den mindestens zwei Elektroden zu erzeugen; eine Einrichtung zum Ermitteln eines dem ersten elektrischen Feld entsprechenden ersten Kapazitätswertes und eines dem zweiten elektrischen Feld entsprechenden zweiten Kapazitätswertes eines durch die mindestens zwei Elektroden gebildeten Kondensators; und einer Einrichtung Ermitteln einer Information über die in dem Abgasstrom enthaltenen Partikel aus dem ersten Kapazitätswert und dem zweiten Kapazitätswert.

Bei der Einrichtung zum Anlegen der ersten und der zweiten Spannung kann es sich um einen Spannungsgenerator handeln. Die Einrichtung zum Ermitteln des ersten und zweiten Kapazitätswertes kann z.B. eine herkömmliche Kapazitätsmesseinrichtung sein. Bei dem Kondensator kann es sich z.B. um einen Plattenkondensator handeln, wobei die als Elektroden dienenden Platten sowohl gegenüberliegend als auch nebeneinander angeordnet sein können.

Zum Beispiel können die mindestens zwei Elektroden in einer Strömungsrichtung des Abgasstroms benachbart zueinander angeordnet sein. Somit ist eine besonders platzsparende Anordnung der Elektroden gegeben. Der Partikelsensor kann folglich mit geringeren Abmessungen und geringerem Gewicht hergestellt werden.

Die Führung kann einem Partikelfilter vorgeschaltet und/oder nachgeschaltet sein. So kann bei einer Anordnung der Führung vor dem Partikelfilter eine Verbrennungscharakteristik des Motors und bei einer Anordnung der Führung nach dem Partikelfilter eine Filterleistung des Partikelfilters überwacht werden.

Ferner kann die Führung ausgebildet sein, um die mindestens zwei Elektroden gegenüber dem Abgasstrom abzudecken. Beispielsweise kann eine Schutzschicht aus einem geeigneten Material auf die Aussparungen, in denen die Elektroden angeordnet sind, aufgelegt sein. Alternativ können die Elektroden auch von einer einstückigen Führung umschlossen sein, beispielsweise als Ergebnis eines Gießverfahrens. Diese Ausführungsform bietet den Vorteil, dass die Elektroden dem Abgasstrom nicht direkt ausgesetzt sind. Korrosion und Abnutzung durch in dem Abgas enthaltene Stoffe kann vermieden und eine Lebensdauer der Elektroden entsprechend verlängert werden. Zudem ist so eine Verfälschung des Messergebnisses aufgrund einer Reaktion des Elektrodenmaterials mit den Stoffen in dem Abgasstrom ausgeschlossen. Zusätzlich kann die Führung aus einem abgasresistenten Material gebildet sein. So kann eine ungewollte Freilegung der Elektroden aufgrund einer chemischen Reaktion des Führungsmaterials mit dem Abgasstrom vermieden werden.

Die Erfindung wird nachstehend anhand der beigefügten Zeichnungen beispielhaft näher erläutert. Es zeigen:
- Fig. 1: eine Prinzipdarstellung eines Partikelsensors; und
- Fig. 2: ein Ablaufdiagramm eines Verfahrens zum Erfassen von Partikeln in einem Abgasstrom, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Ein Partikelsensor ist ausgebildet, um eine Anzahl oder Masse der Rußpartikel in einem strömenden Gas messen. Z.B. können solche Sensoren in Dieselkraftfahrzeugen hinter einem Partikelfilter eingesetzt werden, um eine korrekte Funktionsweise des Filters zu überprüfen, oder auch vor einem entsprechenden Filter, um Verbrennungseigenschaften und Motorzustände zu detektieren. Allgemein können mit einem Partikelfilter Verbrennungsvorgänge überwacht werden.

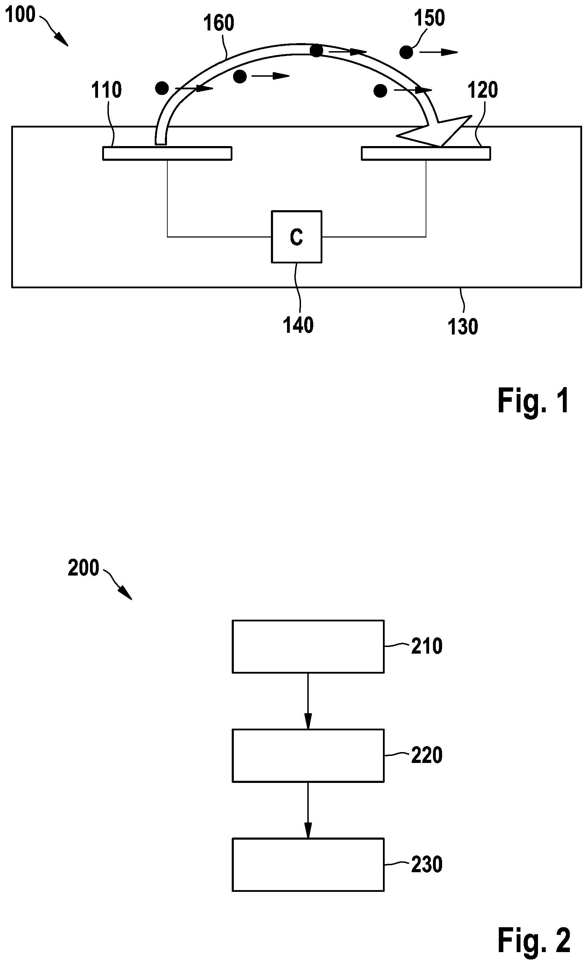

Fig. 1 zeigt eine Prinzipdarstellung eines Partikelsensors 100. Gezeigt sind eine erste Elektrode 110, eine zweite Elektrode 120, eine Führung 130 sowie eine Einrichtung 140 zum Ermitteln eines Kapazitätswertes. Die Führung 130 kann einen Ausschnitt eines Abgasrohres eines Fahrzeugs darstellen.

Gemäß der Darstellung in Fig. 1 sind die erste Elektrode 110 und die zweite Elektrode 120 beabstandet voneinander und in gleicher Höhe so in der Führung 130 angeordnet, dass jeweils eine Hauptfläche der ersten Elektrode 110 und der zweiten Elektrode 120 parallel zu einer Oberfläche der Führung 130 verläuft. Die Einrichtung 140 ist über elektrische Leitungen mit den Elektroden 110, 120 verbunden.

Die Elektroden 110, 120 sind vollständig von dem Material der Führung 130 umschlossen. Ein Abgasstrom, der eine Mehrzahl von Partikeln 150 aufweist, strömt in einer durch eine Mehrzahl von Pfeilen angedeuteten Richtung entlang der Oberfläche der Führung 130. Der Übersichtlichkeit halber ist lediglich einer der Partikel 150 mit einem Bezugszeichen versehen. Eine Richtung eines elektrischen Feldes 160 zwischen den Elektroden 110, 120 ist durch einen Pfeil von der ersten Elektrode 110 zu der zweiten Elektrode 120 angedeutet. Das elektrische Feld 160 wird von den Elektroden 110, 120 hervorgerufen, wenn die Elektroden 110, 120 unterschiedliche elektrische Potentiale aufweisen. Die unterschiedlichen elektrischen Potentiale können erzeugt werden, indem über die Einrichtung 140 eine Spannung zwischen den Elektroden 110, 120 angelegt wird. Das elektrische Feld 160 kann auch in die entgegengesetzte Richtung verlaufen oder die Richtung kontinuierlich wechseln, abhängig davon, ob eine Gleichspannung oder eine Wechselspannung an die Elektroden 110, 120 angelegt ist. Die Einrichtung 140 ist ausgebildet, um zeitlich nacheinander unterschiedliche Spannungen an die Elektroden 110, 120 anzulegen. Dabei kann die Einrichtung 140 zwei oder mehr unterschiedliche Spannungen zum Anlegen an die Elektroden 110, 120 bereitstellen. Die unterschiedlichen Spannungen können innerhalb eines Zeitfensters an die Elektroden 110, 120 angelegt werden, das so kurz bemessenen ist, dass sich die Charakteristik der Partikel 150 in dem Abgasstrom innerhalb des Zeitfensters typischerweise nicht verändert.

Ferner ist die Einrichtung 140 ausgebildet, um die aus den unterschiedlichen Spannungen resultierenden Kapazitätswerte an den Elektroden 110, 120 zu messen. Durch eine geeignete Auswertung der Kapazitätswerte in der Einrichtung 140 oder in einer separaten Auswerteeinrichtung kann auf die Charakteristik, also beispielsweise auf die Anzahl und Art, der Partikel 150 geschlossen werden.

Die Darstellung in Fig. 1 illustriert eine Messung einer Veränderung der Kapazität der zwei Elektroden bzw. Kondensatorplatten 110, 120 durch eine Dielektrizitätszahl der Rußpartikel 150. Die Elektroden 110, 120 können dabei von einem abgasresistiven Material der Führung 130 abgedeckt sein. Somit sind die Messelektroden 110, 120 nicht dem zu messenden Gas ausgesetzt, was zu einer höheren Lebensdauer der Elektroden 110, 120 führt.

Das Gas tritt mit den zu messenden Partikeln 150 in das elektrische Feld 160 ein, das sich zwischen den zwei beliebig angeordneten Elektroden 110, 120 ausbildet, an die eine Spannung angelegt wird. Z.B. können die Elektroden 110, 120 als aufgeklappte Platten eines Plattenkondensators ausgeführt sein, wodurch die Herstellung deutlich vereinfacht werden kann, da sich die funktionalen Elemente in einer Ebene befinden. In Abhängigkeit von einer Anzahl der Rußpartikel 150 wird die effektive Dielektrizitätszahl zwischen den beiden Elektroden 110, 120 verändert, was über die Messung der Kapazität ermittelt werden kann. Wird die Kapazitätsmessung bei verschiedenen Frequenzen durchgeführt, wird also eine Wechselspannung an die Elektroden 110, 120 angelegt, nehmen nur bestimmte Partikel 150 an einer Dielektrizitätsveränderung teil, da sich die Partikel 150 je nach Größe und Art unterschiedlich schnell in dem elektrischen Feld 160 ausrichten können. Dadurch kann aus einer Wechselspannungskapazitätsmessung oder Impedanzmessung nicht nur auf die Anzahl der Partikel 150, sondern auch auf eine Zusammensetzung eines Ensembles von Partikeln 150 geschlossen werden.

Fig. 2 zeigt ein Ablaufdiagramm eines Verfahrens 200 gemäß einem Ausführungsbeispiel der vorliegenden Erfindung. Gemäß dem Verfahren 200 können Partikel in einem entlang einer Führung geleiteten Abgasstrom mittels eines Partikelsensors, beispielsweise des in Fig. 1 gezeigten Partikelsensors, erfasst werden. In einem Schritt 210 werden unterschiedliche Spannungen zeitlich aufeinanderfolgend an die mindestens zwei Elektroden des Partikelsensors angelegt. Zuerst wird eine Gleichspannung und anschließend eine Wechselspannung an die Elektroden angelegt. Alternativ können zuerst eine Wechselspannung und dann eine Gleichspannung an die Elektroden angelegt werden. Entsprechend der Art und/oder Frequenz der angelegten Spannung baut sich ein elektrisches Feld zwischen den Elektroden auf, das von dem entlang der Führung des Partikelsensors geleiteten Abgasstrom durchströmt wird. Mit dem Anlegen der Spannung bilden die mindestens zwei Elektroden einen elektrisch geladenen Kondensator. Abhängig von einer sich durch die Art und/oder Menge der Partikel in dem Abgasstrom ändernden Dielektrizitätszahl des Abgases ändert sich das durch die angelegte Spannung erzeugte elektrische Feld zwischen den mindestens zwei Elektroden. In einem Schritt 220 wird jeweils ein dem aktuellen elektrischen Feld entsprechender Kapazitätswert des durch die Elektroden gebildeten Kondensators ermittelt. Für jede in dem Schritt 210 angelegte Spannung wird somit in dem Schritt 220 ein Kapazitätswert ermittelt. In einem Schritt 230 wird aus den in dem Schritt 220 ermittelten Kapazitätswerten eine Information über die in dem Abgasstrom enthaltenen Partikel ermittelt und zur Weiterverarbeitung bereitgestellt.

Die Schritte 210, 220, 230 des Verfahrens 200 können während einer Fahrt eines Fahrzeugs beliebig oft wiederholt werden, so dass stets genaue Informationen über den Gehalt und/oder die Art von Partikeln in dem Abgasstrom des Fahrzeugs gewonnen werden können. Auch kann zunächst, beispielsweise basierend auf zwei unterschiedlichen Kapazitätswerten, eine erste Information über die in dem Abgasstrom enthaltenen Partikel ermittelt werden, und basierend auf der ersten Information können weitere auf die erste Information abgestimmte Spannungen an die Elektroden angelegt werden, um weitere Kapazitätswerte zu erfassen, basierend auf denen eine detailliertere Information über die in dem Abgasstrom enthaltenen Partikel ermittelt werden kann.

Der hier vorgestellte Partikelsensor auf Basis einer Kapazitäts- und/oder Impedanzmessung kann beispielsweise im Fahrzeug, z.B. als OBD-Sensor (OBD = On-Board-Diagnose) für den Partikelfilter eingesetzt werden. Auch eine Verwendung als allgemeiner Sensor für die Überwachung von Verbrennungsvorgängen, z.B. bei Feuermeldern, Heizungen, etc. ist denkbar.

## Patentansprüche

1. Verfahren (200) zum Erfassen von Partikeln (150) in einem entlang einer Führung (130) geleiteten Abgasstrom eines Fahrzeugs, mittels eines Partikelsensors (100), der mindestens zwei Elektroden (110, 120) aufweist, die in der Führung angeordnet sind, wobei das Verfahren die folgenden Schritte aufweist:
Zeitlich aufeinanderfolgendes Anlegen (210) einer ersten Spannung und einer sich von der ersten Spannung unterscheidenden zweiten Spannung an die mindestens zwei Elektroden, um ein erstes elektrisches Feld (160) und ein zweites elektrisches Feld (160) zwischen den mindestens zwei Elektroden zu erzeugen;
Ermitteln (220) eines dem ersten elektrischen Feld entsprechenden ersten Kapazitätswertes und eines dem zweiten elektrischen Feld entsprechenden zweiten Kapazitätswertes eines durch die mindestens zwei Elektroden gebildeten Kondensators; und
Ermitteln (230) einer Information über die in dem Abgasstrom enthaltenen Partikel (150) aus dem ersten Kapazitätswert und dem zweiten Kapazitätswert,
mit einem Schritt des Vergleichens des ersten Kapazitätswertes mit einem ersten Referenzwert und des zweiten Kapazitätswertes mit einem zweiten Referenzwert, um die Information über die in dem Abgasstrom enthaltenen Partikel (150) zu bestimmen,
wobei in dem Schritt des Vergleichens des ersten Kapazitätswertes mit einem ersten Referenzwert eine Information über eine Menge der in dem Abgasstrom enthaltenen Partikel (150) bestimmt wird,
wobei in dem Schritt des Vergleichens des zweiten Kapazitätswertes mit dem zweiten Referenzwert eine Information über eine Größe der in dem Abgasstrom enthaltenen Partikel (150) bestimmt wird,
wobei bei dem in dem Schritt (210) des zeitlich aufeinanderfolgenden Anlegens als erste Spannung eine Gleichspannung und als zweite Spannung eine Wechselspannung angelegt wird.

## Claims

1. Method (200) for detecting particles (150) in an exhaust gas stream of a vehicle, which exhaust gas stream is guided along a duct (130), using a particle sensor (100) that comprises at least two electrodes (110, 120) that are arranged in the duct, wherein the method comprises the following steps:
sequentially apply (210) a first voltage and a second voltage, differing from the first voltage, to the at least two electrodes in order to produce a first electric field (160) and a second electric field (160) between the at least two electrodes;
determine (220) a first capacitance value that corresponds to the first electrical field and a second capacitance value that corresponds to the second electrical field of a capacitor that is embodied by the at least two electrodes; and
ascertain (230) from the first capacitance value and the second capacitance value information regarding the particles (150) contained in the exhaust gas stream,
comprising a step of comparing the first capacitance value with a first reference value and of comparing the second capacitance value with a second reference value in order to ascertain information regarding the particles (150) contained in the exhaust gas stream,
wherein in the step of comparing the first capacitance value with a first reference value information regarding a quantity of the particles (150) contained in the exhaust gas stream is ascertained,
wherein in the step of comparing the second capacitance value with the second reference value information regarding a size of the particles (150) contained in the exhaust gas stream is ascertained,
wherein in the case of which in the step (210) of sequentially applying a voltage a direct current voltage is applied as a first voltage and an alternating current voltage is applied as a second voltage.

## Revendications

1. Procédé (200) pour la détection de particules (150) dans un flux de gaz d'échappement d'un véhicule conduit le long d'un guidage (130), au moyen d'un détecteur de particules (100), qui présente au moins deux électrodes (110, 120) qui sont disposées dans le guidage, dans lequel le procédé présente les étapes suivantes:
appliquer successivement dans le temps (210) une première tension et une seconde tension différente de la première tension auxdites au moins deux électrodes, afin de produire un premier champ électrique (160) et un second champ électrique (160) entre lesdites au moins deux électrodes;
déterminer (220) une première valeur de capacité correspondant au premier champ électrique et une seconde valeur de capacité correspondant au second champ électrique d'un condensateur formé par lesdites au moins deux électrodes; et
déterminer (230) une information concernant les particules (150) contenues dans le flux de gaz d'échappement à partir de la première valeur de capacité et de la seconde valeur de capacité,
avec une étape de comparaison de la première valeur de capacité avec une première valeur de référence et de la seconde valeur de capacité avec une seconde valeur de référence, afin de déterminer l'information concernant les particules (150) contenues dans le flux de gaz d'échappement,
dans lequel dans l'étape de comparaison de la première valeur de capacité avec une première valeur de référence on détermine une information concernant une quantité des particules (150) contenues dans le flux de gaz d'échappement,
dans lequel dans l'étape de comparaison de la seconde valeur de capacité avec la seconde valeur de référence on détermine une information concernant la taille des particules (150) contenues dans le flux de gaz d'échappement,
dans lequel pour lequel dans l'étape (210) d'application successive dans le temps on applique comme première tension une tension continue et comme seconde tension une tension alternative.
